# EUROPÄISCHE PATENTANMELDUNG

(11) **EP 1 564 103 A1**
(43) Veröffentlichungstag der Anmeldung: **17.08.2005**
(21) Anmeldenummer: 04024735.5
(22) Anmeldetag: 16.10.2004
(51) Int. Cl.: B61D 45/00, B60P 7/08

(54) **Verstellbarer Sicherungskeil**

(30) Priorität: 11.02.2004 DE 102004006800
(71) Anmelder: Greenbrier Germany GmbH, 57072 Siegen (DE); Railion Deutschland AG, 55116 Mainz (DE)
(72) Erfinder: Meyer, Heinrich, 32429 Minden (DE); Hempel, Hinrich, 42897 Remscheid (DE); Höhne, Wolfram, 22339 Hamburg (DE); Wagener, Paul-Werner, 57250 Netphen (DE)
(74) Vertreter: Luderschmidt, Schüler & Partner

(57) **Zusammenfassung**

Die Erfindung betrifft einen Sicherungskeil für Ladegüter auf Fahrzeugen, insbesondere Schienenfahrzeugen mit flachen Ladeböden, wobei auf den Fahrzeugen in Längs- und/oder Querrichtung Rastleisten oder Rastschienen zur Längs- oder Querarretierung der Sicherungskeile vorgesehen sind, die Sicherungskeile aus einer horizontalen, auf dem Fahrzeugboden aufliegenden Grundplatte mit in die Rastleisten oder Rastschienen eingreifenden und sich dort arretierenden Haltenocken und aus einem längsverschieblich auf der Grundplatte geführten Druckstück mit einer schräg nach oben verlaufenden Anlagefläche bestehen.

Das Ziel vorliegender Erfindung bestand darin, einen wirtschaftlich herstellbaren Sicherungskeil für Ladegüter auf Fahrzeugen zu finden, der bei einfacher und zeitsparender Handhabung eine spielfreie und damit sichere Lagerung der Ladung gewährleistet.

Dieses Ziel wird dadurch erreicht, dass an dem Druckstück (2) nahe der Anlagefläche (7) vertikal schwenkbar entgegen der Anlagefläche (7) weisend ein einseitiger Hebel (11) mit mindestens einer Zahnleiste (12) angeordnet ist, dass an der Grundplatte (1) ebenfalls mindestens eine Zahnleiste (9) angeordnet ist, wobei die Zähne (12a) der Zahnleiste (12) des Druckstückes und der Grundplatte (1) die Zähne (9a) der Zahnleiste (9) bei abgesenktem Hebel (11) miteinander in Eingriff stehen.

## Beschreibung

Die Erfindung betrifft einen Sicherungskeil für Ladegüter auf Fahrzeugen, insbesondere Schienenfahrzeugen mit flachen Ladeböden, wobei auf den Fahrzeugen in Längs- und/oder Querrichtung Rastleisten oder Rastschienen zur Längs- oder Querarretierung der Sicherungskeile vorgesehen sind, die Sicherungskeile aus einer horizontalen, auf dem Fahrzeugboden aufliegenden Grundplatte mit in die Rastleisten oder Rastschienen eingreifenden und sich dort arretierenden Haltenocken und aus einem längsverschieblich auf der Grundplatte geführten Druckstück mit einer schräg nach oben verlaufenden Anlagefläche bestehen.

Sicherungskeile der oben genannten Art für Ladegüter auf Fahrzeugen sind aus der Praxis bekannt. Nachdem der ursprünglich für Fahrzeuge mit nagelbaren Fußböden vorgesehene, aus Holz bestehende Keil, der auf dem Fahrzeugboden an dem Ladegut anliegend festgenagelt wurde, sich nicht für Fahrzeuge mit Ladeböden aus Metall oder Mehrschichtplatten eignete, wurden in den Ladeboden, in der Regel in Längsrichtung, Rastschienen angeordnet, in die dann in der Regel aus Metall bestehende Keile gegen das Ladegut angelegt und in die Rastschienen eingehängt. Diese vorbekannten Keile haben den Nachteil, dass sich die Keile entsprechend dem vorgegebenen Rastermaß in den Rastschienen nicht dicht an das Ladegut anlegen ließen und dem Ladegut Bewegungsspielraum ließen.

Aus der Praxis ist ein weiterer, aus Metall bestehender Keil zur Sicherung von Ladegütern auf Fahrzeugen bekannt, der ebenfalls, wie bei vorbestehend beschriebener Ausführung, in dem Ladeboden des Fahrzeugs angeordneten Rastschienen entsprechend dem Rastermaß dieser Rastschienen verschieblich einstellbar ist. Dieser Sicherungskeil besteht im wesentlichen aus einer Grundplatte mit Haltenocken, die in die Rastschiene eingreifen und einem längsverschieblich auf dieser Grundplatte gelagerten Oberteil mit einer sich gegen das Ladegut anlegenden Anlagefläche. Das Oberteil ist hierbei gegenüber der Grundplatte mittels einer Gewindespindel längsverschieblich gelagert. Zur Sicherung des Ladegutes wird der Sicherungskeil in die nächstgelegene geeignete Raste der Rastschienen eingesetzt und dann das Oberteil mittels der Spindel gegenüber der Grundplatte gegen das Ladegut verschoben und angedrückt. Dieser Sicherungskeil hat den Vorteil, dass das Ladegut durch den Sicherungskeil festgehalten und gegen Verschieben gesichert ist. Der Nachteil dieser Ausführung besteht jedoch darin, dass der Sicherungskeil in seiner Herstellung aufwendig und damit teuer ist.

Aus der Praxis ist ein weiterer Sicherungskeil für Ladegüter auf Fahrzeugen bekannt, der ebenfalls, wie bei vorstehend beschriebener Ausführung, in Rastleisten oder Rastschienen im Fahrzeugboden mittels Sicherungsnocken arretierbar ist und wobei der Sicherungskeil aus einer Grundplatte mit den Sicherungsnocken und einem längsverschieblich auf der Grundplatte gelagerten Oberteil mit einer schrägen Anlagefläche besteht, wobei hier jedoch an Stelle der Spindel ein quer in dem Oberteil angeordneter Bolzen vorgesehen ist, der eine Feinjustierung des Oberteils des Sicherungskeils gegenüber dem Unterteil ermöglicht. Der Nachteil dieses Sicherungskeils besteht darin, dass selbst über die Justierung des Oberteils gegenüber dem Unterteil mittels des Bolzens sich Spielräume zwischen Sicherungskeil und dem Ladegut ergeben und damit die rutschfreie Lagerung des Ladegutes nicht gewährleistet ist.

Gemeinsamer Nachteil aller vorstehend beschriebener Sicherungskeile ist deren umständliche und zeitaufwändige Handhabung. Die Be- und Endladezeiten werden unwirtschaftlich verlängert.

Die Aufgabe vorliegender Erfindung bestand darin, einen wirtschaftlich herstellbaren Sicherungskeil für Ladegüter auf Fahrzeugen zu finden, der bei einfacher und zeitsparender Handhabung eine spielfreie und damit sichere Lagerung der Ladung gewährleistet.

Diese Aufgabe wird gemäß der Erfindung dadurch gelöst, dass an dem Druckstück nahe der Anlagefläche vertikal schwenkbar, entgegen der Anlagefläche weisend ein einseitiger Hebel mit mindestens einer Zahnleiste angeordnet ist, dass an der Grundplatte ebenfalls mindestens eine Zahnleiste angeordnet ist, wobei die Zähne der Zahnleiste des Druckstücks und die Zähne der Zahnleiste der Grundplatte bei abgesenktem Hebel miteinander in Eingriff stehen. Hierbei ist die Verzahnung der Zahnleisten sägezahnähnlich in Richtung der Anlagefläche des Druckstücks flach verlaufend ausgebildet. Entgegen der Anlagefläche ist die Verzahnung der Zähne der Zahnleisten steil ausgebildet. Der Vorteil dieses erfindungsgemäßen Sicherungskeils besteht darin, dass er zum einen wirtschaftlich herstellbar ist und zum anderen auf Zeit sparende Weise gegen das Ladegut anlegbar und dort arretierbar ist und sich auch auf einfache Weise bei anliegendem Ladegut wieder lösen lässt. Der Sicherungskeil wird mit den Haltenocken in den Rastleisten oder Rastschienen vorjustiert und dann durch einfaches Verschieben des Druckstücks gegenüber der Grundplatte gegen das Ladegut gedrückt. Hierbei justiert sich das Druckstück durch die Zahnleisten seines Hebels und der Grundplatte gegenüber der Grundplatte, so dass eine sichere und spielfreie Lagerung des Sicherungskeils an dem Ladegut gewährleistet ist. Entgegen der Richtung der Anlagefläche ist die Verzahnung der Zahnleisten mit steilverlaufenden Zähnen ausgebildet. Hierdurch ist gewährleistet, dass bei Belastung des Sicherungskeils das Druckstück gegenüber der Grundplatte verschiebefest arretiert ist. Erfindungsgemäß ist der Hebel vertikal nach unten federbelastet. Durch diese Federbelastung des Hebels ist gewährleistet, dass die Verzahnungen des Hebels und der Grundplatte stets in Eingriff stehen. An seinem vorderen, zum Ladeboden weisenden Ende ist das Druckstück mit einer vertikalen Druckplatte ausgerüstet. Durch diese vertikale Druckplatte kann der Sicherungskeil auch für die Sicherung von Ladegütern mit vertikalen Seitenwänden verwendet werden.

Vorteilhaft ist der Sicherungskeil mit zwei, jeweils seitlich an dem Druckstück gelagerten Hebeln ausgerüstet, die an ihren freien Enden mittels eines Querstücks fest miteinander verbunden sind. Ebenso ist von Vorteil, dass die Zahnleisten der Grundplatte seitlich an der Grundplatte angeordnet sind und dass die Grundplatte auf ihrer Unterseite mindestens zwei Haltenocken mit in Wirkrichtung unter die Rastleisten oder Rastschienen greifenden Sicherungsnasen aufweißt. Durch diese Ausführung des Sicherungskeils ist dessen Lagerung und Wirkung sicher gewährleistet.

Die Grundplatte des Sicherungskeils besteht aus einem kastenförmigen an beiden Längsenden offenen Bauteil mit vertikalen Seitenwangen, wobei die Seitenwangen oben horizontal nach innen abgewinkelt sind und einem mittig längs verlaufenden Steg. Hierbei sind beidseitig des Steges der Grundplatte an diesem und beidseitig des Steges auf dem Innenboden der Grundplatte Gleitstücke angeordnet. Das Druckstück besteht ebenfalls aus einem kastenförmigen, unten etwa negativ dem Inneren der Grundplatte emtsprechenden Bauteil, dass auf den Gleitstücken auf dem Boden der Grundplatte aufliegt und seitlich durch die Gleitstücke an dem Steg der Grundplatte geführt ist. Durch diese Ausbildung der Grundplatte und des Druckstücks wird erreicht, dass der Sicherungskeil insgesamt sehr leicht aus relativ dünnwandigem Blech ausgeführt werden kann. Es wird weiter gewährleistet, dass das Druckstück verkantungsfrei auf der Grundplatte geführt ist.

Seitlich an dem Druckstück sind Gleitstücke oder Rollen angeordnet, die unter den Abwinkelungen der Seitenwangen der Grundplatte anliegend, das Druckstück gegen Ausheben sichern.

Zum leichten Lösen unter Last weisen die korrespondierenden Flächen der Zähne der Zahnleisten in Wirkrichtung des Sicherungskeils bezogen auf die Wirklinie zwischen Drehpunkt des Hebels und Zähnen der Zahnleisten einen Winkel von 90° oder größer 90° auf.

Weitere vorteilhafte Merkmale des erfindungsgemäßen Sicherungskeils sind in den Schutzansprüchen beschrieben.

Einzelheiten der Erfindung sind anhand der Zeichnung geläutert.

### Es zeigen

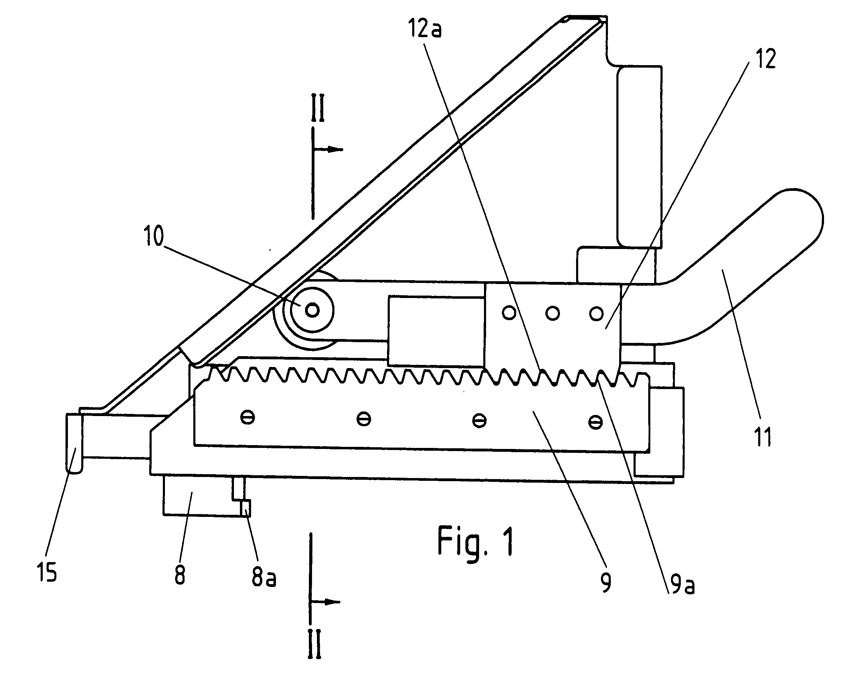

- Figur 1:: Die Seitenansicht des Sicherungskeils gemäß der Erfindung.

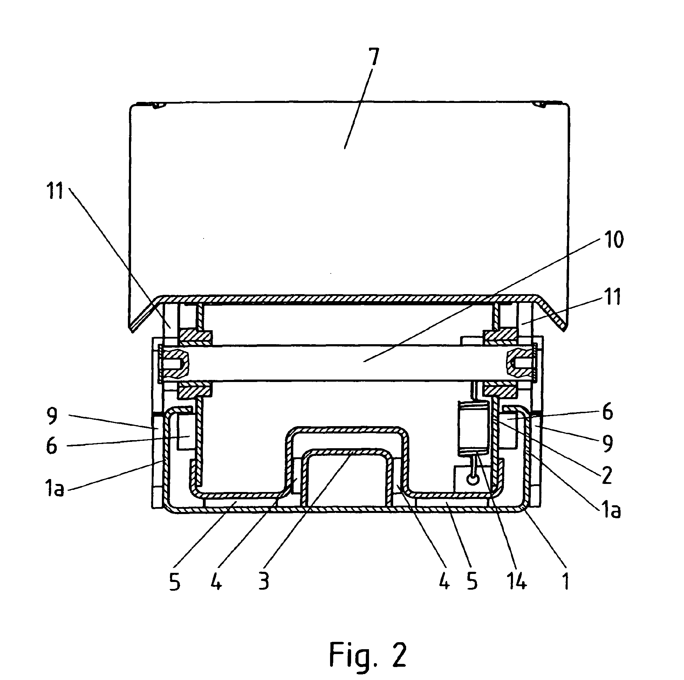

- Figur 2:: Den Schnitt Linie (II-II) der Figur 1.

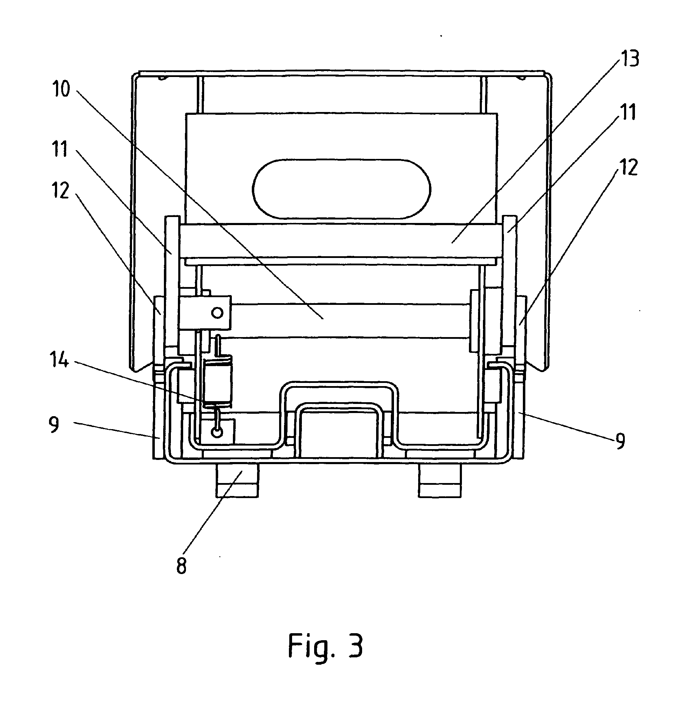

- Figur 3:: Eine Stirnansicht des Sicherungskeils nach Figur 1.

Der Grundkörper des Sicherungskeils besteht im wesentlichen aus der Grundplatte (1) und dem Druckstück (2). Die Grundplatte (1) ist dabei etwa kastenförmig und an beiden Längsenden offen ausgebildet, wobei die vertikalen Seitenwangen (1a) an ihren oberen freien Enden horizontal nach Innen abgewinkelt sind. Mittig auf der Grundplatte (1) ist ein längs verlaufender Steg (3) angeordnet. Beidseitig des Steges (3) der Grundplatte (1) sind an diesem und innen auf dem Boden der Grundplatte (1) Gleitstücke (4, bzw. 5) vorgesehen. Das Druckstück (2) ist ebenfalls aus einem etwa kastenförmigen, in seinem unteren Bereich etwa negativ dem Inneren der Grundplatte (1) entsprechenden Bauteil ausgebildet, das auf den Gleitstücke (5) auf dem Boden der Grundplatte (1) aufliegt und seitlich durch die Gleitstücke (4) an dem Steg (3) der Grundplatte (1) geführt ist. Seitlich an dem Druckstück (2) sind Rollen oder Gleitstücke (6) angeordnet, die unter den horizontalen Abwinkelungen der Seitenwangen (1a) der Grundplatte (1) anliegend, das Druckstück (2) gegen Ausheben sichern. Das Druckstück (2) ist in Wirkrichtung des Sicherungskeils mit einer schräg nach oben verlaufenden Anlagefläche (7) abgedeckt. Diese Anlagefläche (7) ist an ihren beiden Längsseiten schräg nach unten weisend abgewinkelt. Unter dem Boden der Grundplatte (1) sind vertikal nach unten weisend zwei Haltenocken (8) nebeneinander mit in Wirkrichtung des Sicherungskeils zeigenden Sicherungsnasen (8a) angeordnet, die in und unter die Rasten der nicht dargestellten Rastleisten oder Rastschienen des Fahrzeugs greifen.

Außen an jeder Seitenwange (1a) der Grundplatte (1) ist fest eine Zahnleiste (9) mit Zähnen (9a) an ihrer oberen Längsseite angeordnet. Diese Zähne (9a) haben entgegen der Wirkrichtung des Sicherungskeils eine flache Flanke und in Wirkrichtung des Sicherungskeil eine steile Flanke und sind somit sägezahnartig ausgebildet. Oberhalb der Grundplatte (1) ist in dem Druckstück (2) drehbar horizontal quer eine Welle (10) gelagert, an deren Längsenden je ein Hebel (11) drehfest angeordnet ist. An jedem Hebel (11) ist außen eine mit den Zähnen (12a) nach unten weisende Zahnleiste (12) befestigt, deren Zähne (12a) negativ in die Zähne (9a), der Zahnleiste (9) eingreifen. An ihren freien Enden sind die Hebel (11) durch einen Handgriff (13) fest miteinander verbunden. Durch eine Feder (14) sind die Hebel (11) vertikal nach unten federbelastet.

Während die Anlagefläche (7) des Sicherungskeils im wesentlich zur Sicherung von runden Ladegüter dient, ist an dem vorderen Ende des Druckstücks (2) eine vertikale Druckplatte (15) vorgesehen, die zur Sicherung von Ladegütern mit vertikalen Seiten dient.

Zur Arretierung des Sicherungskeils wird dieser nahe dem Ladegut in die nicht dargestellten Rastleisten oder Rastschienen eingehängt und dann per Hand oder Fuß durch Verschieben des Drucksstücks (2) gegenüber der Grundplatte (1) gegen das Ladegut gedrückt. Durch die Haltenocken (8) der Grundplatte (1) ist diese in den Rastschienen oder Rastleisten gegenüber dem Ladeboden dann gegen Verschieben gesichert und das Druckstück (2) gegenüber der Grundplatte (1) durch die Zahnleisten (9 und 12) unverschieblich gelagert. Die Feder (14) der Hebel (11) gewährleistet ein Einrasten der Zähne (12a) in die Zähne (9a) der Zahnleisten (12 bzw. 9). Zum Lösen des Sicherungskeils bei anliegendem Ladegut werden die Hebel (11) über den Handgriff (13) gegen die Kraft der Feder (14) angehoben, wobei die Zähne (12a) der Zahnleiste (12) aus den Zähnen (9a) der Zahnleisten (9) ausgehoben und damit das Druckstück (2) von der Grundplatte (1) gelöst wird. Die sägezahnartige Ausbildung der Zähne (9a und 12a) mit in Wirkrichtung des Sicherungskeils steil verlaufenden und entgegen der Wirkrichtung des Sicherungskeils flach verlaufenden Zähnen ermöglicht einerseits ein leichtes Verschieben des Druckstücks (2) gegenüber der Grundplatte (1) entgegen der Wirkrichtung und andererseits ein sicheres Verklammern des Druckstücks (2) auf der Grundplatte (1) in Wirkrichtung.

## Patentansprüche

1. Sicherungskeil für Ladegüter auf Fahrzeugen, insbesondere Schienenfahrzeugen mit flachen Ladeböden, wobei auf den Fahrzeugen in Längs- und/oder Querrichtung Rastleisten oder Rastschienen zur Längsoder Querarretierung der Sicherungskeile vorgesehen sind, aufweisend eine auf den Fahrzeugboden auflegbare Grundplatte (1) mit in die Rastleisten oder Rastschienen eingreifenden Haltenocken (8) und ein auf der Grundplatte (1) aufgeführtes, längs verschiebbares Druckstück (2) mit einer schräg nach oben verlaufenden Anlagefläche (7),
**dadurch gekennzeichnet, dass** an dem Druckstück (2) ein verschwenkbarer Hebel (11) mit mindestens einer Zahnleiste (12) und an der Grundplatte (1) ebenfalls mindestens eine Zahnleiste (9) angeordnet ist, wobei der Hebel (11) von einer ersten Position, in der die Zahnleiste (12) des Druckstückes (2) mit der Zahnleiste (9) der Grundplatte (1) in Eingriff steht, in eine zweite Position verschwenkbar ist, in der die Zahnleisten (12; 9) nicht in Eingriff stehen.

2. Sicherungskeil nach Anspruch 1,
**dadurch gekennzeichnet, dass** die Verzahnung der Zahnleisten (9 und 12) sägezahnähnlich mit in Richtung der Anlagefläche (9) des Druckstücks (2) flach verlaufenden Zähnen (9a bzw. 12a) ausgebildet ist.

3. Sicherungskeil nach den Ansprüchen 1 und 2,
**dadurch gekennzeichnet, dass** die Verzahnung der Zahnleisten (9 bzw. 12) entgegen der Anlagefläche (7) mit steil verlaufenden Zähnen (9a bzw. 12a) ausgebildet sind.

4. Sicherungskeil nach den Ansprüchen 1 bis 3,
**dadurch gekennzeichnet, dass** der Hebel (11) durch ein Federelement (14) in die erste Position vorgespannt ist.

5. Sicherungskeil nach den Ansprüchen 1 bis 4,
**dadurch gekennzeichnet, dass** das Druckstück (2) an seinem vorderen, dem Ladegut zugewandten Ende eine vertikale Druckplatte (15) aufweist.

6. Sicherungskeil nach den Ansprüchen 1 bis 5,
**dadurch gekennzeichnet, dass** der Sicherungskeil zwei, jeweils seitlich an dem Druckstück (2) gelagerte Hebel (11) aufweist, die an ihren freien Enden über einen Handgriff (13) miteinander verbunden sind.

7. Sicherungskeil nach den Ansprüchen 1 bis 6,
**dadurch gekennzeichnet, dass** die Zahnleisten (9) der Grundplatte (1) seitlich an der Grundplatte (1) angeordnet sind.

8. Sicherungskeil nach den Ansprüchen 1 bis 7,
**dadurch gekennzeichnet, dass** die Grundplatte (1) auf ihrer Unterseite mindestens zwei Haltenocken (9) mit in Belastungsrichtung unter die Rastleisten oder Rastschienen greifenden Sicherungsnasen (8a) aufweist.

9. Sicherungskeil nach den Ansprüchen 1 bis 8,
**dadurch gekennzeichnet, dass** die Grundplatte (1) aus einem kastenförmigen an beiden Längsenden offenen Bauteil mit vertikalen Seitenwangen (1a) besteht, wobei die Seitenwangen oben horizontal nach innen abgewinkelt und einen mittig längs verlaufenden Steg (3) aufweist.

10. Sicherungskeil nach den Ansprüchen 1 bis 9,
**dadurch gekennzeichnet, dass** beidseitig des Steges (3) der Grundplatte (1) Gleitstücke (4 bzw. 5) angeordnet sind.

11. Sicherungskeil nach den Ansprüchen 1 bis 10,
**dadurch gekennzeichnet, dass** das Druckstück (2) aus einem kastenförmigen, unten etwa negativ dem Inneren der Grundplatte (1) entsprechenden Bauteil besteht, das auf den Gleitstücken (5) auf dem Boden der Grundplatte (1) aufliegt und seitlich durch die Gleitstücke (4) an dem Steg (3) der Grundplatte (1) geführt ist.

12. Sicherungskeil nach den Ansprüchen 1 bis 11,
**dadurch gekennzeichnet, dass** seitlich an dem Druckstück (2) Gleitstücke oder Rollen (6) angeordnet sind, die unter den Abwinkelungen der Seitenwangen (1a) der Grundplatte (1) anliegend, das Druckstück (2) gegen Ausheben sichern.

13. Sicherungskeil nach den Ansprüchen 1 bis 12,
**dadurch gekennzeichnet, dass** die schräg verlaufende Anlagefläche (7) des Druckstücks (2) an ihren beiden Längsseiten mit je einer nach unten weisenden Schräge versehen ist.

14. Sicherungskeil nach den Ansprüchen 1 bis 13,
**dadurch gekennzeichnet, dass** die korrespondierenden Flächen der Zähne (9a; 12a) der Zahnleisten (9; 12) in Wirkrichtung des Sicherungskeils bezogen auf die Wirklinie zwischen Drehpunkt (Welle 10) des Hebels (11) und Zähne (9a und 12a) der Zahnleisten (9 und 12) einen Winkel von 90° oder größer 90° aufweisen.
